# EUROPEAN PATENT APPLICATION

(11) **EP 1 681 336 A1**
(43) Date of publication of application: **19.07.2006**
(21) Application number: 06100224.2
(22) Date of filing: 11.01.2006
(51) Int. Cl.: C09K 11/77, H01J 17/49

(54) **Phosphor and plasma display panel using the same**

(30) Priority: 12.01.2005 KR 2005002909
(71) Applicant: Samsung SDI Co., Ltd., Suwon-si Gyeonggi-do (KR)
(72) Inventor: CHOI, Ick-Kyu, c/o Samsung SDI Co., Ltd., Giheung-eup, Yongin-si, Gyeonggi-do (KR); YOU, Young-Chul, c/o Samsung SDI Co., Ltd., Suwon-si, Gyeonggi-do (KR); BAE, Jae-Woo, c/o Samsung SDI Co., Ltd., Suwon-si, Gyeonggi-do (KR); KWON, Seon-Young, c/o Samsung SDI Co., Ltd., Suwon-si, Gyeonggi-do (KR); KIM, Yong-Seon, c/o Samsung SDI Co., Ltd., Giheung-eup, Yongin-si, Gyeonggi-do (KR); SONG, Mi-Ran, c/o Samsung SDI Co., Ltd., Suwon-si, Gyeonggi-do (KR); PARK, Kyu-Chan, c/o Samsung SDI Co., Ltd., Suwon-si, Gyeonggi-do (KR); LEE, Hyun-Deok, c/o Samsung SDI Co., Ltd., Suwon-si, Gyeonggi-do (KR); KIM, Ji-Hyun, c/o Samsung SDI Co., Ltd., Suwon-si, Gyeonggi-do (KR)
(74) Representative: Hengelhaupt, Jürgen

(57) **Abstract**

A phosphor for a plasma display panel (PDP) has a decay time of about 1 ms or less when a Xe concentration is about 10 wt% to about 30 wt% based on the total weight of a discharge gas. A phosphor composition includes the same and a PDP includes a phosphor layer comprising the phosphor or the phosphor composition. When the phosphor or the phosphor composition are used, a low gray scale and low discharge problem due to a green phosphor of a PDP may be solved, a permanent afterimage due to a green phosphor is reduced, and a color reproduction range is significantly broadened compared to a conventional green phosphor of a PDP. In addition, the circuit of the PDP is simplified since colors are not individually subjected to gamma correction but are corrected using a single white gamma. Furthermore, the contrast in a light room is also improved due to the use of phosphor powders with color.

## Description

### BACKGROUND OF THE INVENTION

### Field of the Invention

The present invention relates to a phosphor and a plasma display panel using the same, and more particularly, to a phosphor that has improved decay properties and a plasma display panel that has a phosphor layer formed using the same.

### Description of the Background

A plasma display panel (PDP) uses the emission of light resulting from a phosphor that is bombarded with ultra violet rays that are generated by the discharge of a mixed gas of Ne and Xe that is injected between glass substrates. In the PDP, the phosphor generates visible rays after receiving the resonance radiation (vacuum ultra violet rays of 147 nm) of Xe ions.

Phosphors of a PDP should have good discharge properties, luminance, color coordinates, a short decay time, and should not be deteriorated by, in particular, heat or ultra violet rays.

A green phosphor that includes a single compound that has the required characteristics for use in a PDP has not yet been developed. Thus, a single phosphor that has problems may be used, or a mixture of various phosphors may be used to solve these problems. However, when various phosphors are mixed, the good characteristics are present and the adverse effects also occur, and thus the selection of phosphors is very important.

Zn₂SiO₄:Mn, YBO₃:Tb, and (Ba,Sr)MgAl₁₄O₂₃:Mn have recently been used as green phosphors for PDPs (US 6423248). Among these phosphors, Zn₂SiO₄:Mn (hereinafter referred to as "P1 phosphor") has excellent luminance and decay properties, but is very weak to ion bombardment, causing a reduction in the lifespan of the green phosphor. Further, since the P1 phosphor has a negatively (-) charged surface, unlike blue and red phosphors, a discharge initiation voltage is high, and thus, discharge does not occur at a low gray scale. To change the charge of the surface, attempts have been made to coat the phosphor surface with a positively charged material. However, in this case, the luminance decreases and it is difficult to positively charge the whole surface. Thus, there is room for improvement.

YBO₃:Tb has poorer luminance, color coordinate, and decay properties than the P1 phosphor, but has a positive (+) surface charge, and hence, a good discharge property. Further, this YBO₃:Tb has a good life span due to its strong resistance to VUV and ion bombardment.

To improve the efficiency of a PDP, the concentration of Xe in a discharge gas may be increased. The P1 phosphor is disadvantageous in that the luminance is more rapidly saturated as the amount of Xe increases. Meanwhile, when YBO₃:Tb is excited using an excitation source with a wavelength of 147 nm, it has better luminance than when using an excitation source with a wavelength of 172 nm, and thus, excellent optical properties are obtained in the presence of a high concentration of Xe.

(Ba,Sr)MgAl₁₄O₂₃:Mn is inferior to the two phosphors described above in many respects, but is used to correct the color coordinate of green phosphors due to its good color coordinate (x=0.15, y=0.73). However, (Ba,Sr) MgAl₁₄O₂₃:Mn has a relatively long after-glow and a poor life span with respect to VUV radiation. Thus, the P1 phosphor is used alone without solving the above problems, or a mixture of P1 and YBO₃:Tb phosphors mixed at an appropriate mixing ratio is used as a green phosphor for a PDP. However, even when the two phosphors are mixed, various problems occur. Though the lifespan of the YB03:Tb phosphor is good, permanent afterimage due to the P1 phosphor and a low gray scale and low discharge problem still occur and color purity is also very poor. Since the after-glow of the P1 phosphor should be reduced to obtain a decay time of less than 10 ms due to long after-glow of the YBO₃:Tb phosphor, it is difficult to obtain the optimal properties of the P1 phosphor.

### SUMMARY OF THE INVENTION

According to a first aspect of the present invention there is provided a phosphor for a PDP comprising at least one activator selected from the group consisting of Ce, Eu and Pr. The inventive phosphor has a good gray scale, discharge properties, contrast in a light room, and an improved after-glow characteristics.

According to a second aspect of the present invention there is provided a phosphor composition for a PDP comprising the above-mentioned phosphor and at least one phosphor selected from the group consisting of a phosphor represented by Formula (2), a phosphor represented by Formula (3), a phosphor represented by Formula (4), and a phosphor represented by Formula (5):

Mgₓ₂Al_{y2}O_{x2+3/2y}:Mn_{z2} Formula (2)

where 0.5 ≤ x2 ≤ 1.5; 1.5 ≤ y2 ≤ 2.5; 0.1 ≤ z2 ≤ 10,

(In_{1-a-b-c}Gd_{b}Y_{c})BO₃:Tbₐ Formula (3)

where 0 ≤ a ≤ 1;0 ≤ b ≤ 10.5 and 0 < c ≤ 1,

(Y₁₋ₓ₃,Gdₓ₃)BO₃:Euy₃ Formula (4)

where 0 ≤ x3 ≤ 1 and 0.1 ≤ y3 ≤ 40, and

(Y_{1-x,}Gdₓ)₂O₃:Eu_{y4} Formula (5)

where 0 ≤ x ≤ 1 and 0.1 ≤ y4 ≤ 40.

According to another aspect of the present invention there is provided a plasma display panel (PDP) including the above-mentioned phosphor or phosphor component.

The present invention further discloses a phosphor for a PDP with a decay time of about 1 ms or less. The present invention also discloses a phosphor for a PDP with a decay time of about 1 ms or less when the concentration of Xe is about 10 wt% to about 30 wt% based on the total weight of a discharge gas. The present invention also discloses a phosphor for a PDP that includes at least one activator such as Ce, Eu and Pr, for example.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.
FIG. 1 is a Photoluminescence (PL) spectrum of a phosphor composition of MgAl₂O₄:Mn, (Y,Gd)BO₃:Tb and Y₃Al₅O₁₂:Ce according to an exemplary embodiment of the present invention and a Zn₂SiO₄:Mn phosphor measured using an excitation light of 147 nm.
FIG. 2 is an exploded perspective view of a plasma display panel according to an exemplary embodiment of the present invention.
FIG. 3 is a graph illustrating the normalized luminance of a phosphor composition of MgAl₂O₄:Mn, YBO₃:Tb and Y₃Al₅O₁₂:Ce with respect to time according to an exemplary embodiment of the present invention and a Zn₂SiO₄:Mn phosphor measured using an excitation light of 147 nm.

### DETAILED DESCRIPTION OF THE ILLUSTRATED EMBODIMENTS

The invention is described more fully hereinafter with reference to the accompanying drawings, in which embodiments of the invention are shown. In the drawings, the size and relative sizes of layers and regions may be exaggerated for clarity.

It will be understood that when an element such as a layer, film, region or substrate is referred to as being "on" another element, it can be directly on the other element or intervening elements may also be present. In contrast, when an element is referred to as being "directly on" another element, there are no intervening elements present.

The present invention provides a phosphor and a phosphor composition for improving contrast in a light room while solving permanent afterimage, low gray scale and low discharge, and color purity problems resulting from phosphors in a plasma display panel (PDP), in particular, a green phosphor.

The concentration of Xe in a discharge gas may be increased to improve the efficiency of a PDP and solve a permanent afterimage problem. The present invention provides a phosphor (particularly a green phosphor) and a phosphor composition that has good optical properties and does not deteriorate under a high concentration of Xe.

The phosphor has a decay time of 1 ms or less, particularly when the concentration of Xe is about 10 wt% to about 30 wt%, and particularly about 15 wt%, based on the total weight of a discharge gas. When the concentration of Xe is less than about 10 wt%, the amount of vacuum ultra violet light generated is small, which reduces light emitting efficiency. When the concentration of Xe is greater than about 30 wt%, power consumption is increased and the lifespan is significantly decreased due to an increased driving voltage of a panel, which deteriorates the efficiency of a PDP. The remaining about 70 wt% to about 90wt% of the discharge gas may include Ne and He, for example.

The phosphor may include at least one activator including, but not limited to Ce, Eu and Pr.

The phosphor emits light in the range of visible light in a Xe plasma and contains Ce³⁺, Eu³⁺ and Pr³⁺, which are activators with a short decay time.

An example of the phosphor is the phosphor represented by Formula (1):

Yₓ₁(Ga_{y1}Al_{1-y1})_{z1}O_{3/2(x1+z1)}:Ceₖ Formula (1)

where 0.5 ≤x1 ≤5, 0 ≤y1 ≤1, 0.5 ≤z1 ≤7, and 0.1 ≤k ≤ 15.

The phosphor represented by Formula (1) has good after-glow properties and contrast in a light room and examples thereof may include Y₃Ga₅O₁₂:Ce, Y₃Al₅O₁₂:Ce and YAlO₃:Ce, for example. A phosphor composition according to an embodiment of the present invention includes the phosphor represented by Formula (1) and at least one phosphor such as a phosphor represented by Formula (2), a phosphor represented by Formula (3), a phosphor represented by Formula (4) and a phosphor represented by Formula (5):

Mgₓ₂Al_{y2}O_{x2+3/2y}:Mn_{z2} Formula (2)

where 0.5 ≤ x2 ≤ 1.5, 1.5 ≤ y2 ≤ 2.5, 0.1 ≤ z2 ≤ 10,

(In_{1-a-b-c}Gd_{b}Y_{c})BO₃:Tbₐ Formula (3)

where 0 ≤ a ≤ 1, 0 ≤ b ≤ 0.5 and 0 < c ≤ 1,

(Y₁₋ₓ₃,Gdₓ₃)BO₃:Eu_{y3} Formula (4)

where 0 ≤ x3 ≤ 1 and 0.1 ≤ y3 ≤ 40,

(Y₁₋ₓ,Gdₓ)O₃:Eu_{y4} Formula (5)

where 0 ≤ x ≤ 1 and 0.1 ≤ y4 ≤ 40.

The phosphor represented by Formula (2) has good color purity and discharge properties and is not deteriorated by VUV and heat, but has poor luminance and after-glow properties. An example of the phosphor represented by Formula (2) is MgAl₂O₄:Mn.

The phosphor represented by Formula (3) has good luminance properties under a high concentration of Xe and an example thereof is (Y,Gd)BO₃:Tb. The phosphor represented by Formula (4) has good luminance and lifespan properties, but its color purity is not satisfactory. An example of the phosphor represented by Formula (4) is (Y,Gd)BO₃:Eu. The phosphor represented by Formula (5) has good color purity and lifespan properties, but its luminance is not satisfactory. An example of the phosphor represented by Formula (5) is (Y,Gd)₂O₃:Eu.

Based on the weight of the phosphor represented by Formula (1) the phosphor composition preferable comprise
(i) about 30 wt % to about 75 wt% of the phosphor represented by Formula (2), and/or
(ii) about 15 wt% to about 70 wt% of the phosphor represented by Formula (3), and/or
(iii) about 70 wt% to 90 wt% of the phosphor represented by Formula (4), and/or
(iv) about 70 wt% to about 90 wt% of the phosphor represented by Formula (5).

When the concentration of the phosphor represented by Formula (2) is less than about 30 wt%, color purity is reduced. When the concentration of the phosphor represented by Formula (2) is greater than about 75 wt%, luminance is reduced. When the concentration of the phosphor represented by Formula (3) is less than about 15 wt%, luminance is reduced. When the concentration of the phosphor represented by Formula (3) is greater than about 70 wt%, color purity is reduced. When the concentration of the phosphor represented by Formula (4) is less than about 70 wt%, color purity is reduced. When the concentration of the phosphor represented by Formula (4) is greater than about 90 wt%, a decay time is increased, which is undesirable. When the concentration of the phosphor represented by Formula (5) is less than about 70 wt%, color purity is reduced. When the concentration of the phosphor represented by Formula (5) is greater than about 90 wt%, a decay time is increased, which is undesirable.

A phosphor composition that includes the phosphor represented by Formula (1), the phosphor represented by Formula (2) and the phosphor represented by Formula (3) is possible. An example of such a phosphor composition includes about 70 wt% of MgAl₂O₄:Mn, about 20 wt% of (Y,Gd)BO₃:Tb and about 10 wt% of Y₃Al₅O₈:Ce.

This phosphor composition is based on MgAl₂O₄:Mn and (Y,Gd)BO₃:Tb, which have good lifespan properties under Xe plasma, and further includes the phosphor represented by Formula (1) having Ce³⁺, Eu³⁺ and Pr³⁺, which are activators and emit visible light under Xe plasma and have a short decay time.

The phosphor composition described above emits light in a wavelength range of about 500 nm to about 580 nm using vacuum ultraviolet rays as an excitation source.

The phosphors represented by Formula (1), Formula (2), Formula (3), Formula (4) and Formula (5) may be prepared by heat treating starting materials for the respective phosphors using a general solid phase reaction method under an oxidation or reduction atmosphere at about 1000°C to about 1600°C for less than about 10 hours.

A plasma display panel (PDP) using the above phosphor composition will now be described.

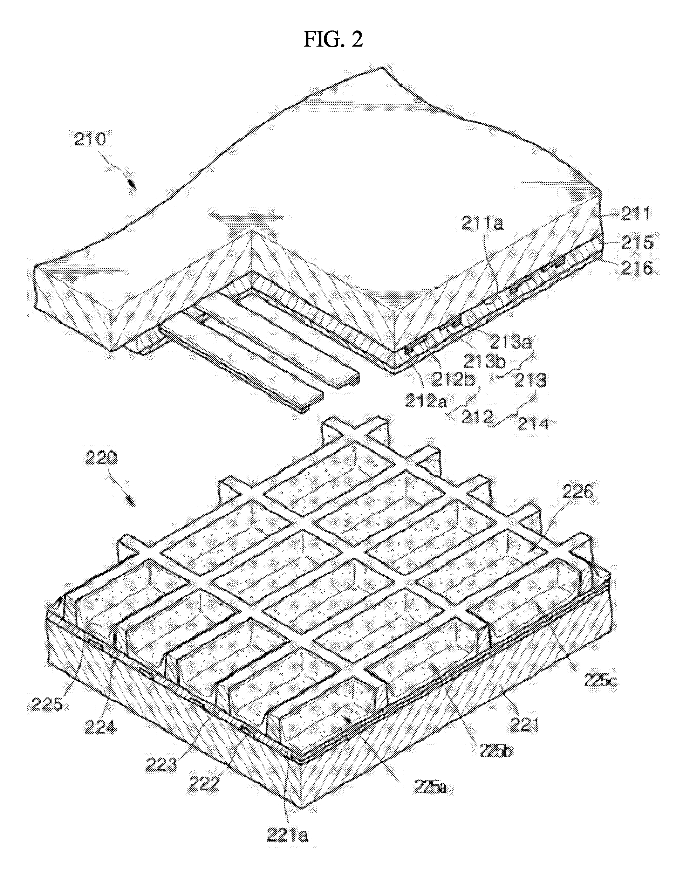

A PDP according to an embodiment of the present invention includes a transparent front substrate, a rear substrate disposed parallel to the front substrate, and light emitting cells separated by barrier walls interposed between the front substrate and the rear substrate. The PDP further included address electrodes that extend over light emitting cells in one direction, a rear dielectric layer covering the address electrodes, a phosphor layer disposed in the light emitting cells, sustain electrode pairs extending perpendicular to the address electrodes, a front dielectric layer covering the sustain electrode pairs, and a discharge gas in the light emitting cells. The structure of the PDP will now be described in more detail with reference to FIG. 2.

Referring to FIG. 2, the PDP includes a front panel 210 and a rear panel 220.

The front panel 210 includes a front substrate 211, sustain electrode pairs 214 that are disposed in the rear surface of the front substrate 211 and extend along a row of light emitting cells 226, a front dielectric layer 215 that covers the sustain electrode pairs 214, and a protecting layer 216 that covers the front dielectric layer 215.

The rear panel 220 includes a rear substrate 221 that is disposed parallel to the front substrate, address electrodes 222 that are disposed on a front surface 221a of the rear substrate 221 and that extend perpendicular to the sustain electrode pairs 214, and a rear dielectric layer 223 covering the address electrodes 222. The rear panel 220 further includes barrier walls 224 interposed between the front substrate 211 and the rear substrate 221 on the rear dielectric layer 223 to separate the light emitting cells 226 and a red phosphor layer 225a, a green phosphor layer 225b and a blue phosphor layer 225c respectively comprising red, green and blue phosphors which absorb ultra violet rays emitted from a discharge gas due to a sustain discharge in the barrier walls 224 to emit visible light.

In an embodiment of the present invention, the green phosphor layer 225b comprises the phosphor composition that includes the phosphor represented by Formula (1), the phosphor represented by Formula (2), and the phosphor represented by Formula (3). A method for preparing the phosphor layer 225b using the phosphor composition is not particularly limited.

For example, the phosphor composition may be mixed with a binder to facilitate printing to form a paste, and is then printed using a screen method through a screen mesh to obtain the phosphor layer.

The red phosphor layer 225a and the blue phosphor layer 225c comprise phosphors conventionally used in the preparation of PDPs. Examples of the red phosphor may include (Y,Gd)BO₃:Eu, Y(V,P)O₄:Eu, etc., and examples of the blue phosphor may include BaMgAl₁₀O₁₇:Eu, etc.

The front substrate 211 and the rear substrate 221 may comprise glass and the front substrate 211 may have high transmittance.

The address electrodes 222 that are disposed on the front surface 221 a of the rear substrate 221 and extend along a row of the light emitting cells 226 may comprise a metal with a high electrical conductivity, such as Al. The address electrodes 222 are used for address discharge together with Y electrodes 212. The address discharge is used to select a light emitting cell 226 and a sustain discharge described below may occur in a light emitting cell 226 where address discharge occurs.

The address electrodes 222 are covered by the rear dielectric layer 223, which prevents damage to the address electrodes 222 due to the collision of charged particles during the address discharge. The rear dielectric layer 223 comprise a dielectric substance that is capable of inducing charged particles. Examples of such a dielectric substance may include, but not limited to, PbO, B₂O₃, SiO₂, etc.

The barrier walls 224 that separate the light emitting cells 226 are formed between the front substrate 211 and the rear substrate 221. The barrier walls 224 provides a discharge space between the front substrate 211 and the rear substrate 221, prevents crosstalk between adjacent light emitting cells 226, and increases the surface area of the phosphor layer 225. The barrier walls 224 comprises a glass including Pb, B, Si, Al, O, etc., and may include a filler such as ZrO₂, TiO₂ or Al₂O₃ and a pigment such as Cr, Cu, Co, Fe or TiO₂.

The sustain electrode pairs 214 extend along a row of the light emitting cells 226 and are perpendicular to the address electrode 222. Each of the sustain electrode pairs 214 includes a pair of sustain electrodes 212 and 213 that are arranged in parallel and are separated by a predetermined distance on the lower surface of the front substrate 211 such that a sustain discharge may occur between the pair of sustain electrodes 212 and 213. The sustain electrode 213 is an X electrode and the sustain electrode 212 is a Y electrode. The sustain discharge is caused by an electric potential difference between the X electrode 213 and the Y electrode 212. The X electrode 213 and the Y electrode 212 include transparent electrodes 213b and 212b and bus electrodes 213a and 212a, respectively. In some cases, the scanning electrode and common electrode may comprise only of bus electrodes without transparent electrodes.

The transparent electrodes 213b and 212b comprise a transparent material which is an electrical conductor and does not prevent light emitted from the phosphor from passing through the front substrate 211. An example of such a material is indium tin oxide (ITO). However, since the transparent electrical conductor such as ITO has a high resistance, when the sustain electrodes 212 and 213 comprise only the transparent electrode, a voltage drop along the length of the transparent electrode is large, thereby increasing the electrical power required to drive the PDP and decreasing the response speed of an image. To improve this, the bus electrodes 213a and 212a which comprise a metal with a high electric conductance such as Ag, are disposed at outer edges of the transparent electrodes.

The sustain electrodes 212 and 213 are covered by the front dielectric layer 215. The front dielectric layer 215 may prevent a direct current from flowing between the X electrode 213 and the Y electrode 212 and prevent damage to the sustain electrodes 212 and 213 due to the collision of charged particles during the sustain discharge. The front dielectric layer 215 comprises a dielectric substance with a high transmittance, such as PbO, B₂O₃, SiO₂, etc.

The protecting layer 216 may be formed on the front dielectric layer 215. The protecting layer 216 prevents damage to the front dielectric layer 215 due to the collision of charged particles during the sustain discharge and releases many secondary electrons upon the sustain discharge. The protecting layer 216 may comprise MgO.

A discharge gas is filled in the light emitting cell 226. The discharge gas may comprise a Ne-Xe mixed gas including about containing about 5 wt% to about 10 wt% of Xe and may comprise He instead of Ne. The PDP of the present embodiment has a decay time of 1 ms or less, and particularly 400 µs to 1 ms. The color temperature of the PDP is about 8500 K and a white color coordinate is (0.285, 0.300).

The PDP according to embodiments of the present invention is not limited to the structure of FIG. 2.

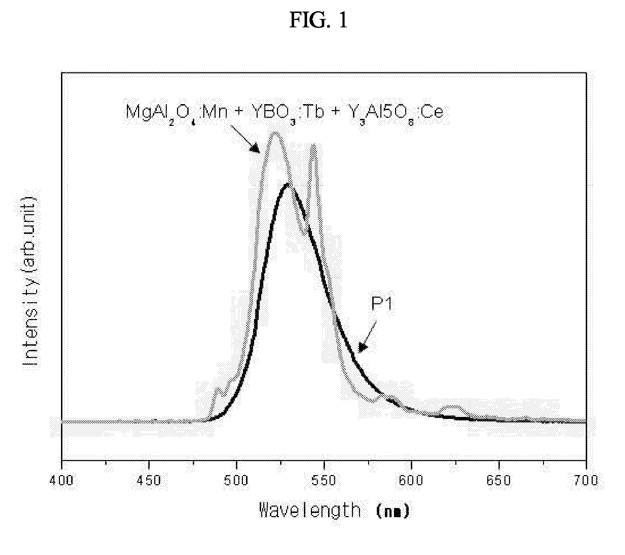

FIG. 1 is a PL spectrum of a phosphor composition including MgAl₂O₄:Mn, YBO₃:Tb and Y₃Al₅O₁₂:Ce.

Referring to FIG. 1, when the phosphor composition is excited by light with a wavelength of about 147 nm, a light emitting band of about 520 nm for MgAl₂O₄:Mn and a light emitting band of about 543 nm for YBO₃:Tb are simultaneously observed and a light emitting band for Y₃Al₅O₁₂:Ce, which has a low concentration in the phosphor composition, is not observed. In addition, a light emitting band for the P1 phosphor with a peak at 527 nm is observed.

The present invention will now be described in greater detail with reference to the following examples. The following examples are for illustrative purposes only, and are not intended to limit the scope of the invention.

### Example 1

Phosphor compositions were prepared as indicated in Table 1 and coated on to light emitting cells of a PDP to form a green phosphor layer. A discharge gas in the PDP included 55 wt% of Ne, 35 wt% of He, and 15 wt% of Xe.

In Example 1, the relative luminance, the CIE coordinate, and the decay time were investigated and are shown in Table 1.

The decay time was measured using an oscilloscope by measuring the time for the luminance of light emitted from the phosphor compositions due to excitation light of a pulsed Xe lamp was reduced to 1/10 of its initial luminance. The relative luminance was measured by injecting a mixed gas of 55 wt% Ne, 35 wt% He, and 15 wt% Xe in a discharge chamber and discharging the mixed gas. The relative luminance was determined using a commercially available P1 phosphor as a reference.

**Table 1**

| Composition (wt%) | | | Relative luminance (%) | CIE coordinate | | Decay time (ms) |
|---|---|---|---|---|---|---|
| MgAl₂O₄:Mn | YBO₃:Tb | Y₃Al₅O₁₂:Ce | (Ex 147 nm) | x | y | |
| Zn₂SiO₄:Mn | | | 100 | 0.251 | 0.701 | 7 |
| 100 | | | 95 | 0.178 | 0.748 | 15 |
| | 100 | | 103 | 0.328 | 0.610 | 9 |
| | | 100 | 60 | 0.433 | 0.544 | 0.43 |
| 30 | 70 | | 100 | 0.272 | 0.661 | 11 |
| 50 | 50 | | 101 | 0.248 | 0.683 | 12 |
| 70 | 30 | | 102 | 0.213 | 0.715 | 13 |
| 80 | 20 | | 103 | 0.197 | 0.730 | 15 |
| 90 | 10 | | 101 | 0.188 | 0.739 | 15 |
| 90 | | 10 | 94 | 0.196 | 0.734 | 0.9 |
| 95 | | 5 | 93 | 0.189 | 0.740 | 0.9 |
| 65 | 25 | 10 | 101 | 0.231 | 0.705 | 0.8 |
| 70 | 20 | 10 | 102 | 0.217 | 0.717 | 0.8 |
| 75 | 15 | 10 | 100 | 0.210 | 0.723 | 0.8 |

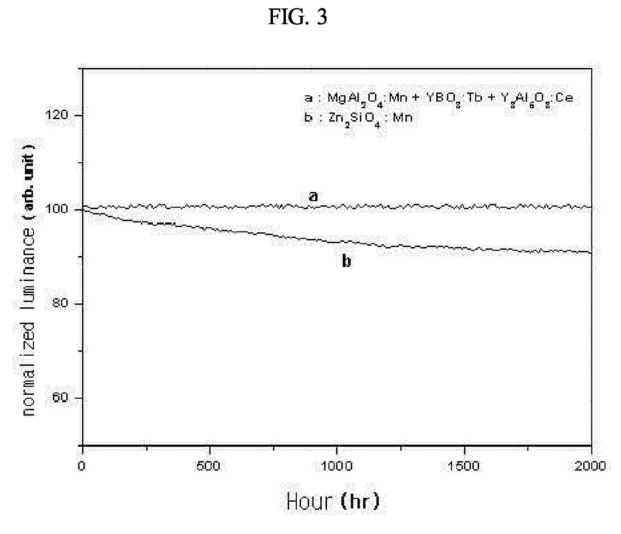

P1 phosphor was measured using an excitation light of 147 nm for 200 hours, and the results are shown in FIG. 3.

Referring to FIG. 3, it can be seen that the phosphor composition of MgAl₂O₄:Mn, YBO₃:Tb and Y₃Al₅O₁₂:Ce has a longer lifespan than the P1 phosphor.

### Example 2

A phosphor composition of (Y,Gd)BO₃:Eu as a red phosphor, BaMgAl₁₀O₁₉:Eu as a blue phosphor, and a mixture of 70 wt% MgAl₂O₄:Mn, 20 wt% (Y,Gd)BO₃:Tb and 10 wt% Y₃Al₅O₈:Ce as a green phosphor was prepared. The red, blue, green and white phosphor compositions were coated on light emitting cells to form white, red, blue, and green phosphor layers, respectively, to form a PDP. A discharge gas in the PDP included 55 wt% Ne, 35 wt% He and 15 wt% Xe.

In Example 2, the relative luminance, the CIE coordinate, and the decay time were measured and are shown in Table 2.

**Table 2**

| | | |
|---|---|---|
| White | CIE x | 0.287 |
| | CIE y | 0.308 |
| | Luminance | 277 |
| | Color temperature (K) | 9590 |
| Red | CIE x | 0.644 |
| | CIE y | 0.345 |
| | Luminance | 135 |
| Green | CIE x | 0.217 |
| | CIE y | 0.717 |
| | Luminance | 327 |
| Blue | CIE x | 0.153 |
| | CIE y | 0.063 |
| | Luminance | 42.9 |

It can be seen from Table 2 that the color reproduction range is significantly larger and a higher color temperature is obtained than when a conventional green phosphor is used.

### Example 3

Phosphor compositions with the composition and components shown in Table 3 were prepared and coated on red light emitting cells of a PDP to form phosphor layers. A discharge gas in the PDP included 55 wt% Ne, 35 wt% He and 15 wt% Xe.

In Example 3, the relative luminance, the CIE coordinate, and the decay time were investigated and are shown in Table 3.

**Table 3**

| Sample | CIE x | CIE y | Luminance | Decay time (ms) |
|---|---|---|---|---|
| (Y,Gd)BO₃:Eu | 0.649 | 0.350 | 32 | 9 |
| Y₂O₃:Eu | 0.655 | 0.342 | 15 | 4 |
| 90 parts by weight of (Y,Gd)BO₃:Eu + 10 parts by weight of YAG:Ce | 0.634 | 0.364 | 32 | 0.9 |
| 80 parts by weight of (Y,Gd)BO₃:Eu + 20 parts by weight of YAG:Ce | 0.629 | 0.378 | 35 | 0.7 |
| 70 parts by weight of (Y,Gd)BO₃:Eu + 30 parts by weight of YAG:Ce | 0.614 | 0.392 | 38 | 0.5 |
| 90 parts by weight of Y₂O₃:Eu + 10 parts by weight of YAG:Ce | 0.641 | 0.356 | 16 | 0.9 |
| 80 parts by weight of Y₂O₃:Eu + 20 parts by weight of YAG:Ce | 0.627 | 0.368 | 17 | 0.7 |
| 70 parts by weight of Y₂O₃:Eu + 30 parts by weight of YAG:Ce | 0.613 | 0.38 | 18 | 0.6 |

Table 3 shows that when a conventional red phosphor YAG:Ce is mixed with the green phosphors, the color coordinate characteristic is slightly lowered, but the luminance is significantly increased and the decay time is significantly reduced.

According to the present invention, a low gray scale and a low discharge problem due to a green phosphor of a PDP may be solved. In addition, a permanent afterimage due to a green phosphor, which is the worst disadvantage of a conventional PDP is reduced, and a color reproduction range is significantly broadened by reducing x = 0.28, which is the color coordinate of a conventional green phosphor of a PDP, to x = 0.21. In addition, the circuit of the PDP is simplified since colors are not individually subjected to gamma correction but are corrected using a single white gamma. Furthermore, the contrast in a light room is also improved due to the use of phosphor powders that have color. In addition, when the concentration of Xe in a discharge gas is high, optical properties are good and the phosphor does not deteriorate.

## Claims

1. A phosphor for a PDP, comprising:
at least one activator selected from the group consisting of Ce, Eu, and Pr.

2. The phosphor of claim 1, being represented by Formula (1):
Yₓ₁(Ga_{y1}Al_{1-y1})_{z1}O_{3/2(x1+z1)}:Ceₖ Formula (1)
where 0.5 ≤ x1 ≤ 5; 0 ≤ y1 ≤ 1; 0.5 ≤ z1 ≤ 7; and 0.1 ≤ k ≤ 15.

3. The phosphor of claim 2,
wherein the phosphor represented by Formula (1) is Y₃Ga₅O₁₂:Ce, Y₃Al₅O₁₂:Ce or YAlO₃:Ce.

4. A phosphor composition for a PDP, comprising:
the phosphor for a PDP according to any of claims 1 to 3 and
at least one phosphor selected from the group consisting of a phosphor represented by Formula (2), a phosphor represented by Formula (3), a phosphor represented by Formula (4), and a phosphor represented by Formula (5):
Mgₓ₂Al_{y2}O_{x2+3/2y}:Mn_{z2} Formula (2)
where 0.5 ≤ x2 ≤ 1.5; 1.5 ≤ y2 ≤ 2.5; 0.1 ≤ z2 ≤ 10,
(In_{1-a-b-c}Gd_{b}Y_{c})BO₃:Tbₐ Formula (3)
where 0 ≤ a ≤ 1;0 ≤ b ≤ 10. 5 and 0 < c ≤ 1,
(Y₁₋ₓ₃,Gdₓ₃)BO₃:Eu_{y3} Formula (4)
where 0 ≤ x3 ≤ 1 and 0.1 ≤ y3 ≤ 40, and
(Y_{1-x,}Gdₓ)₂O₃:Eu_{y4} Formula (5)
where 0 ≤ x ≤ 1 and 0.1 ≤ y4 ≤ 40.

5. The phosphor composition of claim 4,
wherein the phosphor represented by Formula (2) is MgAl₂O₄:Mn, the phosphor represented by Formula (3) is (Y,Gd)BO₃:Tb, the phosphor represented by Formula (4) is (Y,Gd)BO₃:Eu, and the phosphor represented by Formula (5) is Y₂O₃:Eu.

6. The phosphor composition of claim 4,
wherein the phosphor composition comprises based on the weight of the phosphor represented by Formula (1):
(i) about 30 wt % to about 75 wt% of the phosphor represented by Formula (2), and/or
(ii) about 15 wt% to about 70 wt% of the phosphor represented by Formula (3), and/or
(iii) about 70 wt% to 90 wt% of the phosphor represented by Formula (4), and/or
(iv) about 70 wt% to about 90 wt% of the phosphor represented by Formula (5).

7. The phosphor composition of claim 4, comprising:
the phosphor represented by Formula (1) and the phosphor represented by Formula (2).

8. The phosphor composition of claim 4, comprising:
about 70 wt% of MgAl₂O₄:Mn, about 20 wt% of (Y,Gd)BO₃:Tb, and about 10 wt% of Y₃Al₅O₈:Ce.

9. The phosphor composition of claim 4, adapted to emit light at about 500 nm to about 580 nm.

10. A PDP having a phosphor layer including the phosphor for a PDP according to any of the claims 1 to 3.

11. A PDP with a phosphor layer including the phosphor composition according to any of the claims 4 to 9.

12. The PDP of claim 11,
wherein the phosphor composition has a decay time of about 1 ms or less when a Xe concentration is about 10 wt% to about 30 wt% based on the total weight of a discharge gas.
